## Europäisches Patentamt
## European Patent Office
## Office européen des brevets

(19)

(11) Publication number: **0 105 616**
**A2**

(12) # EUROPEAN PATENT APPLICATION

(21) Application number: **83305108.9**

(22) Date of filing: **02.09.83**

(51) Int. Cl.³: **F 16 J 15/16**
**F 16 J 15/34**

(30) Priority: **03.09.82 GB 8225204**

(43) Date of publication of application:
**18.04.84 Bulletin 84/16**

(84) Designated Contracting States:
**DE IT**

(71) Applicant: **Cannings, John Arthur**
**Midway Crowe Hill Limpley Stoke**
**Bath Avon(GB)**

(72) Inventor: **Burles, Ernest James**
**46 Coronation Avenue**
**Oldfield Park Bath Avon(GB)**

(74) Representative: **Stuart, Ian Alexander et al,**
**MEWBURN ELLIS & CO. 2/3 Cursitor Street**
**London EC4A 1BQ(GB)**

(54) **Magnetic rotary seal.**

(57) A rotary seal has a housing 14 and a relatively rotatable runner 16,18 for mounting on a shaft 10. The runner includes a sealing ring 18 with an axial sealing face 32. An insert sleeve assembly 20 has a complementary sealing face, and is axially displaceable. It is rotationally fast with either the housing 14 or the runner 16,18 (preferably with that one which does not rotate: the housing 14 in the Figure). The insert sleeve assembly 20 and the rotationally fast element (14 or 16,18) bear magnets arranged to repel, so that the sleeve assembly 20 is urged into sealing contact. Unlike seals using magnetic attraction, there is no force attracting contaminants to the sealing faces.

EP 0 105 616 A2

-1-

## MAGNETIC ROTARY SEAL

This invention relates to rotary seals for establishing a rotational seal between a shaft and a surrounding member relative to which the shaft is rotatable.

A conventional rotary seal comprises a housing, a runner within and rotatable relative to the housing for mounting securely on a shaft, an insert sleeve assembly located in an annular space between the housing and runner and rotationally secured and sealed but axially movable relative to the housing, the insert sleeve being provided with an annular sealing face in a plane at right-angles to the axis of the shaft, the runner having a co-operating annular sealing ring which mates with that of the insert assembly to establish a rotational seal. Normally springs are provided between the insert assembly and the housing so as to urge the insert assembly axially towards the sealing ring.

It is known to replace the springs with magnets on the rotating component of the seal, these magnets serving to attract axially the insert sleeve assembly, either by interaction with co-operating magnets on the insert assembly, or by magnetic attraction towards ferromagnetic material from which that insert assembly is made. However, such arrangements attract metal particles towards the sealing faces, and are not really suitable for clean high-speed applications.

The present invention provides a rotary seal comprising two sealing members which are relatively rotatable and relatively axially displaceable and which have respective complementary sealing faces which are movable together or apart by said axial displacement; and two magnet means associated with respective ones of said sealing members and arranged to urge said axial displacement in a sense to urge said sealing faces together; characterised in that said two magnet means comprise magnets or sets of magnets which are arranged in a repulsion mode to effect said urging.

Preferably the seal comprises a housing, a runner within and rotatable relative to the housing for mounting securely on a shaft, an insert sleeve assembly which provides a first said sealing member and is located in an annular space between the housing and runner and rotationally secured and sealed but axially movable relative to one of them, the insert sleeve assembly being provided with an annular sealing face in a plane at right-angles to the axis of the shaft, the other of the housing and runner providing the second said sealing member and having a co-operating annular sealing face which mates with that of the insert assembly to establish a rotational seal.

One or each set of magnets may comprise one or more annular magnets.

The magnetic urging biases the sealing faces to interact, but in use, once sealing contact is established, this will generally be maintained primarily by the hydraulic pressure.

An arrangement is possible in which a magnet or set of magnets provides at least part of one of the sealing faces, in addition to interacting repulsively with the other magnet means. For example, in a seal using two annular magnets in repulsion mode, the other (axial) face(s) of one or both of them may be used as sealing faces. This construction can be particularly useful when space is limited. If both are so used, then a double seal is provided. Of course, particularly when compactness is not critical, the or each such magnet can be associated with a nonmagnetic component which provides the sealing face.

In order that the invention may be more clearly understood, some embodiments will now be described with reference to the accompanying drawings, in which:

Fig. 1 shows a cross-section through a seal mounted on a shaft;

Fig. 2 is a partly schematic section through a seal using annular magnets;

Fig. 3 is a like view of another embodiment of a seal using annular magnets; and

Fig. 4 is a like view of a double seal using annular magnets.

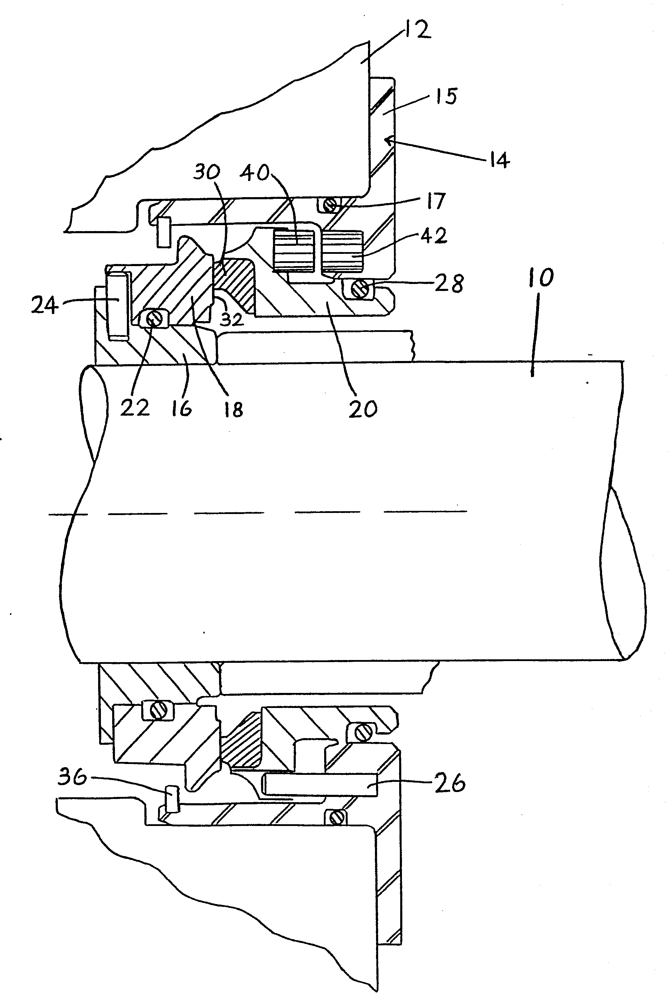

Referring to Fig. 1, the seal is mounted between a rotatable shaft 10 and a fixed structure 12 through which the shaft passes. The seal comprises a housing 14 in the form of a flanged sleeve, the flange 15 of which is secured to the fixed structure 12, a runner sleeve 16 which is securely mounted on the shaft, a sealing ring 18 mounted on the shaft, a sealing ring 18 mounted on the runner, and an insert sleeve assembly 20 mounted on the housing, the sealing ring and insert assembly being located in an annular space between the runner and the housing. The sealing ring 18 forms part of the runner assembly and is sealed to the runner by means of an O-ring 22 and prevented by a drive pin 24 from rotation relative to the runner. The insert sleeve assembly is prevented by dowels 26 from rotation relative to the housing, and is sealed to the housing by means of an O-ring 28, but is axially movable relative to the housing. An annular sealing element 30, for example of carbon, is secured to the insert assembly so as to co-operate with an annular sealing face 32 on the sealing ring 18 in a plane at right-angles to the axis 34 of the shaft. A circlip 36 in the end of the housing sleeve prevents the components of the seal from coming apart prior to installation. An O-ring 17 establishes a seal between the housing 14 and the fixed structure 12.

In order to urge the sealing element 30 into contact with the sealing face 32, two sets of magnets 40,42 respectively are provided, one set on the housing and the other set on the insert assembly. Each set comprises a number of magnets, for example 12, distributed around the axis of the seal, and arranged so that each magnet 40 in one set is opposite a magnet 42 in the other set. The magnets are arranged in a repulsion mode; that is to say with their adjacent portions having like polarity, whereby the insert assembly is urged axially towards the sealing ring, thereby urging the sealing element 30 into contact with the sealing face 32.

Apart from the magnets operating in the repulsion mode, it will also be noted that if the shaft is a component which rotates, the magnets are mounted on the stationary components, which further enhances the successful operation of the seal, and makes it even more suitable for clean high speed applications. In the prior art magnetic seal constructions, the magnets have been mounted on the rotating component, which is less satisfactory in operation.

Of course, the present invention may also be applied with magnets mounted on relatively rotating components.

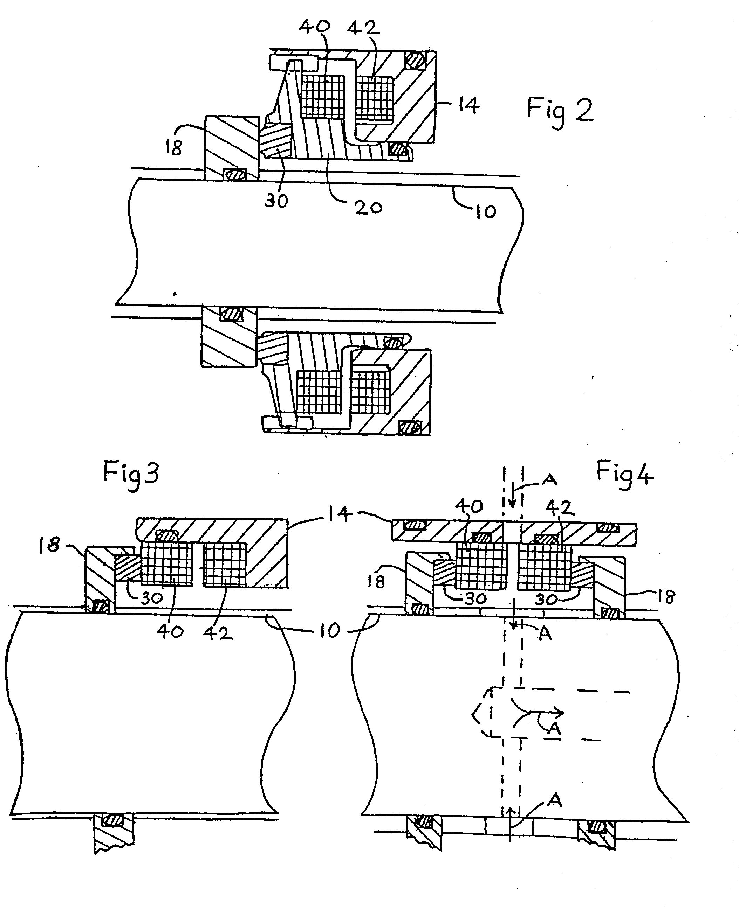

Figs. 2 to 4 show further embodiments. Corresponding components are referred to by the same reference numerals as in Fig. 1. Thus Fig. 2 shows a seal assembly quite similar to that shown in Fig. 1, but using a pair of annular magnets 40,42 instead of arrays of cylindrical magnets. The magnetisation of the annular magnets is axial, i.e. the flat end faces are the poles.

Fig. 3 shows an embodiment similar to that of Fig. 2, but simplified by the omission of an insert sleeve assembly. Instead, the magnet 40 bears the sealing element 30 which forms a sealing face.

Fig. 4 shows a double seal, in which each magnet 40, 42 carries a sealing element 30 on the face not involved in the repulsive interaction. There is a corresponding pair of sealing rings 18 which engage therewith. Such a double seal can be used to isolate a flow of pressure fluid axially between the two seals, as indicated by the arrows A.

-5-

Instead of the or each sealing element 30 being attached to a magnet as described for Figs. 3 and 4, it could be attached to the opposed component (sealing ring 18). The magnet (40 or 42) could then have a simple lapping face.

CLAIMS:

1.    A rotary seal comprising two sealing members (18 and 30,20) which are relatively rotatable and relatively axially displaceable and which have respective complementary sealing faces (32) which are movable together or apart by said axial displacement; and two magnet means (40,42) associated with respective ones of said sealing members and arranged to urge said axial displacement in a sense to urge said sealing faces together; characterised in that said two magnet means comprise magnets (40,42) or sets of magnets which are arranged in a repulsion mode to effect said urging.

2.    A rotary seal according to claim 1 and comprising a housing (14), a runner (16,18) within and rotatable relative to the housing (14) for mounting securely on a shaft (10), an insert sleeve assembly (20) which provides a first said sealing member and is located in an annular space between the housing (14) and runner (16,18) and rotationally secured and sealed (28) but axially movable relative to one of them, the insert sleeve assembly (20) being provided with an annular sealing face in a plane at right-angles to the axis of the shaft (10), the other of the housing (14) and runner (16,18) providing the second said sealing member and having a co-operating annular sealing face (32) which mates with that of the insert assembly (20) to establish a rotational seal.

3.    A rotary    seal according to claim 2 for use with a rotary shaft (10), wherein  the housing (14) does not rotate in use, the insert assembly (20) is rotationally secured and sealed to the housing (14), and the magnets (40,42) are provided on the housing (14) and on the insert assembly (20).

4.    A rotary seal according to any preceding claim wherein the magnets (40,42) are on non-rotating components of the seal.

-7-

5.   A rotary seal according to any preceding claim wherein there are respective equal pluralities of magnets (40,42) arranged in a repulsion mode, with each magnet arranged opposite a magnet of the other plurality.

6.   A rotary seal according to any of claims 1 to 4 wherein said magnet means comprise annular magnets (40, 42).

7.   A rotary seal according to claim 6 wherein at least one of the annular magnets (40) bears a sealing member (30) on a face opposed to the face involved in the repulsive interaction.

8.   A rotary seal according to claim 7 wherein both of the annular magnets (40,42) bear sealing members (30) on faces opposed to the repelling faces, and the seal includes two members (18) providing respective complementary sealing faces.

9.   A rotary seal according to any preceding claim wherein one of said mating annular sealing faces is provided by a sealing element (30) comprising carbon.

Fig 2

Fig3

Fig4